Europäisches Patentamt

(19) European Patent Office

Office européen des brevets

(11) Publication number: **0 178 906**
**A2**

(12) **EUROPEAN PATENT APPLICATION**

(21) Application number: **85307421.9**

(22) Date of filing: **15.10.85**

(51) Int. Cl.⁴: **G 11 B 20/00**
**H 04 N 5/92**

(30) Priority: **15.10.84 JP 215749/84**
**15.10.84 JP 215748/84**

(43) Date of publication of application:
**23.04.86 Bulletin 86/17**

(84) Designated Contracting States:
**DE FR GB**

(71) Applicant: **Pioneer Electronic Corporation**
**4-1 Meguro 1-chome**
**Meguro-ku Tokyo 153(JP)**

(72) Inventor: **Takaoka, Saburo Pioneer Electronic Corp.**
**Tokorozawa Works, No. 2610 Hanazono 4-chome**
**Tokorozawa-shi Saitama(JP)**

(74) Representative: **Brunner, Michael John et al,**
**GILL JENNINGS & EVERY 53-64 Chancery Lane**
**London WC2A 1HN(GB)**

(54) Magnetic recording and reproducing apparatus.

(57) A magnetic recording and reproducing apparatus in which audio PCM–encoded data is recorded and reproduced in areas in which video data is usually recorded using a head drum rotational speed and tape feeding speed different from those used for ordinary video or audio signal recording. Accordingly, because the recording area for the audio signals is effectively increased, the number of quantization bits of the audio signal can be increased without reducing the number of channels of audio signals recorded or the sampling frequency, thus providing an improved dynamic range and reproduced sound quantity.

EP 0 178 906 A2

Croydon Printing Company Ltd

Fig. 1

# MAGNETIC RECORDING AND REPRODUCING APPARATUS

The present invention relates to a magnetic recording and reproducing apparatus of the type employing a helical-scanning type recording and reproducing technique.

Recently, 8 mm VTRs (Video Tape Recorders) have become available which employ standardized recording and reproducing formats.   In these devices, a rotary-drum type magnetic recording and reproducing head is employed which includes two magnetic heads mounted on a rotary drum at positions 180° opposite one another.  The tape is passed around the head, contacting the head through an angle of somewhat greater than 180°, for instance, through 190°.   With this magnetic head, video and audio signals are recorded on the tape in parallel, slanted tracks, each track being formed during the rotation of one of the heads through 180°.   For the audio portion, two-channel stereophonic signals are recorded using a PCM (Pulse Codetector Modulation) technique and with the audio signals being recorded in separate tracks from the video signals.  The audio signals are recorded as eight-bit samples of the input analog signals, with the sampling frequency being set at twice the horizontal scanning frequency of the video signal.  However, in this system, the available dynamic range of the audio signals is often insufficient due to the eight-bit sample size.

To improve the dynamic range of the audio signals, it is necessary to increase the number of bits of each sample. In doing so, it has been considered to place the audio signals in the video field since the available space for the audio signals is not sufficient for this purpose due to the standardization requirements. If the audio signal samples are recorded in this manner, it has been necessary to fill one complete video frame with the audio signal samples in order to conserve memory space and maintain the desired utilization factor of the memory.

Accordingly, it is an object of the present invention to provide a magnetic recording and reproducing apparatus in which the drawbacks discussed above have been eliminated.

In accordance with this and other objects of the invention, a magnetic recording and reproducing apparatus is provided in which the speed of the drum head and the speed of the tape are set for audio signal recording and reproducing in such a manner that the number of audio signal samples recorded in a section on the tape equivalent to one video signal area is an integer value and the number of bits recorded in this section is matched with the capacity of the semiconductor memory employed in the system. Accordingly, in the magnetic recording and reproducing apparatus of the invention, the data can be easily processed while the utilization factor of the semiconductor memory is made high.

More specifically, the above and other objects of the invention are met by a magnetic recording and reproducing apparatus, comprising: a head drum; a pair of magnetic heads mounted on said head drum and spaced apart from one another by an angle of 180°, a magnetic tape passing around said drum through an angle of greater than 180°, whereby each of said magnetic heads contacts said magnetic tape during rotation thereof during a first period; means for recording a first data signal using said magnetic heads during a second period during which each of said magnetic heads rotates through an angle of 180°; means for recording a second data signal during a third period during which said magnetic heads rotate through a predetermined angle; means for generating a first command when a signal bearing video data as said first data signal is recorded and reproduced and a second command when a signal bearing PCM audio data as said first data signal is recorded and reproduced; means for driving said head drum at a first rotational speed and said magnetic tape at a first feeding speed when said first command is given and for driving said head drum at a second rotational speed and said magnetic tape at a second feeding speed when said second command is given.

With this arrangement, because the PCM data is recorded and reproduced at the second rotational speed of the head

0178906

drum and the second feeding speed of the magnetic tape in an area where video data is ordinarily recorded and from which video data is ordinarily reproduced when the head is driven at the first rotational speed and the tape moved at the first feeding speed, the recording area is increased, and hence the number of quantization bits can be increased without reducing the number of channels recorded or increasing the sampling frequency. Consequently, according to the invention, it becomes possible to increase the dynamic audio range and improve the reproduced sound quality.

Still further, the above and other objects of the invention are met by the provision of a magnetic recording and reproducing apparatus, comprising: a head drum; a pair of magnetic heads mounted on said head drum and spaced apart from one another by an angle of 180°, a magnetic tape passing around said drum through an angle of greater than the angle of 180°, whereby each of said magnetic heads contacts said magnetic tape during rotation thereof during a first period; means for recording a first data signal using said magnetic heads during a second period during which each of said magnetic heads rotates through an angle of 180°; means for recording a second data signal during a third period during which said magnetic heads rotate through a predetermined angle; a servo mechanism for performing tracking control in accordance with a four-frequency pilot tracking method during reproducing; means for generating a switching command when said servo mechanism is not in a locked condition within a predetermined period of time following the start of a reproducing operation; and means for changing a rotational speed of said head drum and a feeding speed of said magnetic tape in response to said mode switching command.

Accordingly, with this apparatus, because the mode switching command is given when the servo mechanism is not detected as being in the locked condition based on the four-frequency pilot tracking method a predetermined length of time after the start of a reproducing operation, whereupon the rotational speed of the drum and the feeding speed of the tape are changed is response to the mode switching command, the rotational speed of the drum and the feeding speed of the tape during reproduction are set at values employed at the time of recording automatically. Therefore, the ease and reliability of the apparatus are significantly improved.

In the drawings:-

Fig. 1 shows a block diagram of a magnetic recording and reproducing apparatus constructed in accordance with the present invention;

Fig. 2 is a diagram showing the signal arrangement on a magnetic tape produced with the appartus of Fig. 1;

Fig. 3 is a diagram depicting a signal recording area on a magnetic tape established with the apparatus of Fig. 2 in a first mode thereof; and

Fig. 4 is a diagram similar to Fig. 3 depicting a signal recording area on a magnetic tape established with the apparatus of Fig. 2 in a second mode thereof.

Referring to the drawings, a preferred embodiment of a magnetic recording and reproducing apparatus constructed in accordance with the teachings of the present invention will now be described.

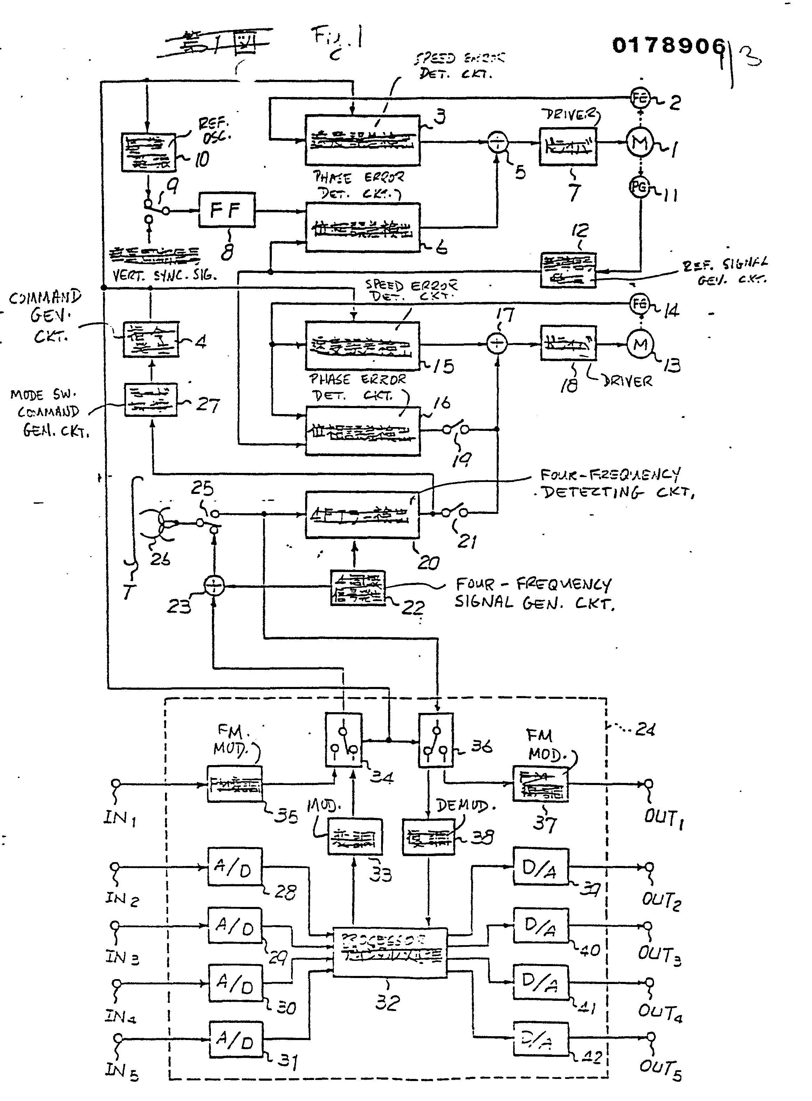

With reference first to Fig. 1, a frequency generator (FG) 2 produces an AC signal having a frequency proportional to the rate of rotation of a drum motor 1 which drives a magnetic drum upon whnich the magnetic recording and reproducing heads are mounted. This signal is supplied to a speed error detecting circuit 3, as is the output of a command generating circuit 4. The output of the command generating circuit 4 is, for instance, in the recording mode, at a low logic level in a first command mode and at a high logic level in a second command mode, the command mode being selected by operation of a mode designating switch (not shown). The state of the output signal of the command generating circuit is inverted for the reproducing mode.

The speed error detecting circuit 3 is preferably implemented with a F/V (Frequency/Voltage) converter, of known construction, which produces a voltage having a magnitude determined by the frequency of the output of the frequency generator 2, with the coefficient of conversion being determined by the state of the output signal of the command generating circuit 4. An analog speed error signal is thus produced at the output terminal of the speed error detecting circuit 3. This signal is summed with a phase error signal produced by a phase error detecting circuit 6, and the resulting sum signal is applied as a drive signal for the drum motor 1 through a driver circuit 7.

The output of a T-type flip-flop 8 is supplied to one input terminal of the phase error detecting circuit 6. During periods in which a video signal is being recorded, the input of the flip-flop 8 receives the vertical synchronizing signal (elsewhere separated from the video signal being recorded), whereas it receives the output of a reference oscillator 10 during recording or reproducing a PCM-encoded audio signal. In either case, the flip-flop 8 serves to divide in half the frequency of its input. The selection of the input signal to the flip-flop is effected with a switch 9. The output frequency of the reference oscillator corresponds to the frequency of the output signal of the command generating circuit 4.

The head drum 1 drives a pulse generator (PG) 11, the latter producing a pulse each time either of the magnetic heads passes a predetermined reference position as the drum 1 rotates. The output of the pulse generator 11 drives a reference signal generating circuit 12 implemented with a T-type flip-flop. Thus, the output signal of the reference signal generating circuit 12, namely, a reference signal SWP, changes state each time one of the magnetic heads passes the reference position. This reference signal SWP is supplied to the other input of the phase error detecting circuit 6, which accordingly produces a phase error signal having a magnitude indicative of the difference in phase between the reference signal SWP and the output of the flip-flop 8.

An AC signal having a frequency corresponding to the speed of a capstan motor 13 is produced by a frequency generator (FG) 14 and supplied to a speed detecting circuit 15 and a phase error detecting circuit 16. The output of the speed error detecting circuit 15 is applied as one input of an adder 17, the output of which is employed as a drive signal for the capstan motor 13 via a driver 18.

The reference signal SWP is also supplied to a phase error detecting circuit 16. The phase error detecting circuit 16 produces a phase error signal corresponding to the difference in phase between the reference signal SWP and the output of the frequency generator 14. The output of the phase error detector circuit is applied as the other input signal to the adder 17 through a switch 17, the latter being in the on position during the recording mode. Further, the output of a four-frequency detecting circuit 20, namely, an error detecting circuit while operates in accordance with the well-known four-frequency tracking method, is applied as the other input to the adder 17 through a switch 21, the latter being in the on position in the reproducing mode. The output of a four-frequency signal generating circuit 22 is supplied to the input of the four-frequency error detecting circuit 20. The four-frequency signal generating circuit 22 accordingly produces four signals $f_1$, $f_2$, $f_3$ and $f_4$ having frequencies of $5f_H$, $7.5f_H$, $10.5f_H$ and $9.5f_H$, respectively, where $f_H$ is the horizontal synchronizing signal frequency, each time the state of the reference signal SWP changes. The output of the four-frequency signal generating circuit 22 is supplied as a pilot signal to the four-frequency error detecting circuit 20, and simultaneously added by an adder 23 to the output of a signal processing circuit 24 for synthesization. The output of the adder 23 is applied, in the recording mode, to a magnetic head 26 through a switch 25 for recording on a magnetic tape T.

In the reproducing mode, the RF signal read from the tape T by the magnetic head 26 is applied through the switch 25 to the four-frequency error detecting circuit 20 and the signal processing circuit 24. The four-frequency error detecting circuit 20 mixes the RF signal with the output of the four-frequency signal generating circuit 22, extracts the $f_H$ and $3f_H$ components therefrom, and produces an error signal corresponding to the difference in level between the $f_H$ and $3f_H$ components. The extracted $f_H$ and $3f_H$ components correspond to the pilot signal recorded in the track adjacent that scanned by the magnetic head, and hence tracking control can be effected using the signal indicative of the difference in levels between the $f_H$ and $3f_H$ components.

Further, the error signal produced by the four-frequency error detecting circuit 20 is supplied to a mode switching command generating circuit 27. The switching command generating circuit 27 in response generates a mode switching command when the level of the error signal produced by the four-frequency error detecting circuit 20 does not reach a predetermined range within a predetermined period of time from the time of commencement of the reproducing operation. The output of the mode switching command generating circuit 27 is supplied to the command generating circuit 4.

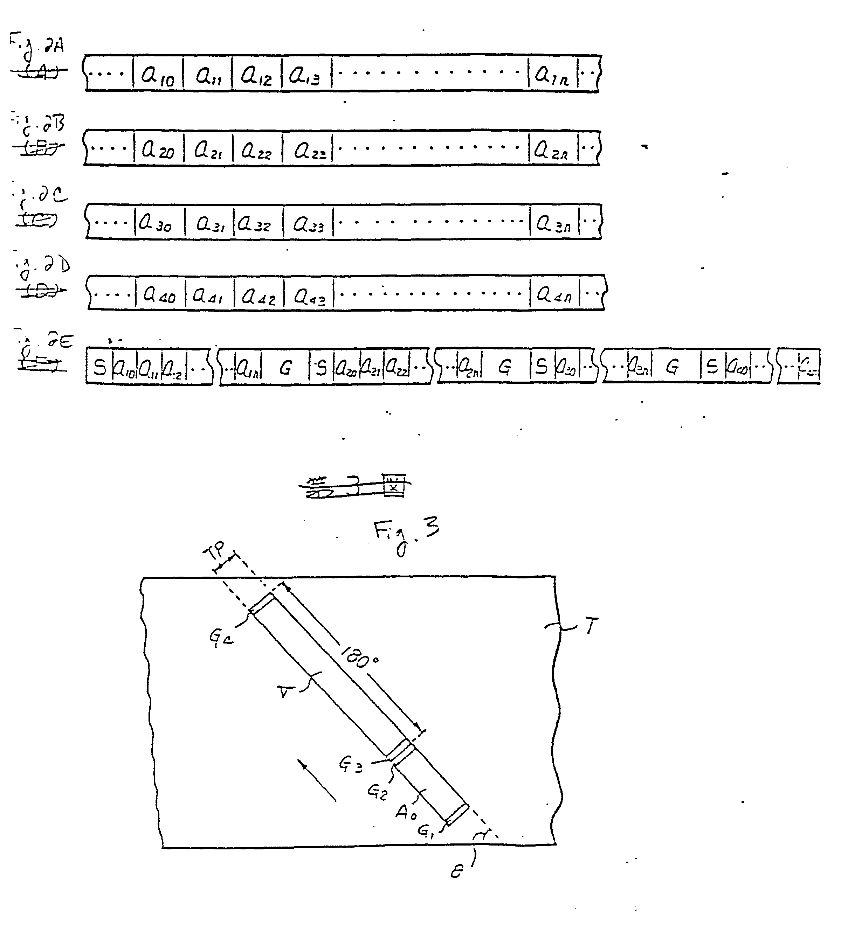

A video signal and four-channel audio signals $a_1$, $a_2$, $a_3$ and $a_4$ are supplied to a signal processing circuit 24 via its input terminals $IN_1$, $IN_2$, $IN_3$ and $IN_4$, respectively. Within the circuit 24, the signals $a_1$ to $a_4$ are supplied to respective A/D converters 28 to 31, and, as indicated in Figs. 2A to 2D, formed into digital data strings, which are applied to a digital processing circuit 32. The digital processing circuit 32 encodes the received digital signals in a form suitable for recording. Specifically, a time-base compression operation is carried out in such a manner that audio signals, which in real time span one field, are compressed into a time period of one-fourth of a field. Further, each of the audio signals $a_1$ to $a_4$ forms one block. These blocks are interleaved in such a manner as to timewise distribute error bursts and to allow for the insertion of codes and synchronizing signals necessary for detecting and correcting errors and to provide guard spaces between blocks. As a result, the output of the digital processing circuit 32 is as shown in Fig. 2E. (However, for clarity of illustration, the interleaving and error detection and correction codes are omitted.)

The output of the digital processing circuit 32 is suitably modulated (phase modulation) by a modulator 33 and then supplied to the adder 23 through the switch 34 in a second mode, namely, when a second mode command signal is being produced by the command generating circuit 4, and then recorded on the tape T. On the other hand, in a first mode, namely, when a first mode command signal is being produced by the command generating circuit 4, the video signal, applied through the video input terminal $IN_1$, is modulated by an FM modulator 35 and supplied to the adder through the switch 34.

The signal at the output of the FM modulator is recorded on the tape T.

In Fig. 1, a recording system for recording ordinary two-channel audio signals (in addition to the four-channel signals $a_1$ to $a_4$) has been omitted. For compatibility purposes, the two-channel signals can still be provided, although this is not necessary in the case where compatibility is not needed.

Also, only one magnetic head is shown in Fig. 1, but of course two such heads must be employed.

For reproduction, the RF signal applied to the signal processing circuit 24 is supplied to an FM modulator 37 through a switch 36 during the first mode so that the video signal can be demodulated. The demodulated video signal is provided at an output terminal $OUT_1$. The RF signal is applied to a demodulator 38 via the switch 36 in the second mode. The demodulated output of the demodulator 38 is supplied to the digital processing circuit. The digital processing circuit carries out correction, sample interleaving, and time-base expansion on a block basis, supplying the resulting data blocks to D/A converters 39 to 42. Specifically the data blocks $a_1$ to $a_4$ are thereby converted to reproduced audio signals by the D/A converters 39 to 42, respectively, the analog outputs of which are supplied to the output terminals $OUT_2$ to $OUT_5$, respectively.

Although the description above refers to the case where four-channel audio signals are recorded and reproduced, it is also of course possible to merely record two-channel audio signals twice or a monaural audio signal four times, in which cases the number of D/A converters can be reduced accordingly.

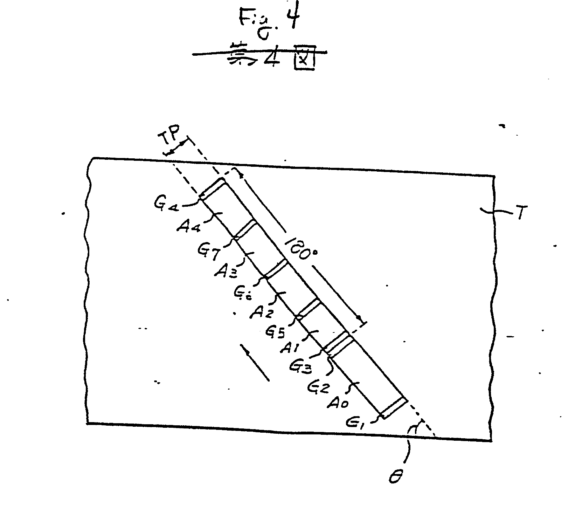

With the circuit described above, the signal recording area on the magnetic tape T is as shown in Fig. 3. Here, it is assumed that the diameter of the head drum is 40 mm, the speed of the drum motor 1 in the first mode (for the NTSC system) is 1,800 rpm, and the speed of the magnetic tape relative to the head drum is 14.35 mm/sec. As shown in Fig. 3, a guard space $G_1$, a PCM audio signal area $A_0$, guard spaces $G_2$ and $G_3$, a video signal area V, and a guard space $G_4$ are formed with a track angle $\theta$ of 4° 54' (between an arrow shown in the drawing and the dirction of movement of the tape T) and a track pitch TP of 20.5 $\mu$m. For the PAL system, the speed of the drum should be 1,500 rpm, and, assuming a tape speed of 20.05 mm/sec, the track angle $\theta$ should be 4° 55' and the track pitch 34.4 $\mu$m. The guard bands $G_1$ and $G_2$ provide margins for the PCM audio signals to reduce the amount of jitter, while the guard band $G_3$ performs the same function for the video signal.

Fig. 4 shows the signal recording area formed on the magnetic tape T under the conditions that, in the second mode, the speed of the drum head is 2,000 rpm and the speed of the tape T relative to the drum is approximately 20 mm/sec. In this case, the guard space $G_1$, the PCM audio area $A_0$, the guard spaces $G_2$ and $G_3$ a guard space $G_5$, a second channel PCM audio signal area $A_2$, a guard space $G_6$, a third channel PCM audio signal area $A_3$, a guard space $G_7$, a fourth channel PCM audio signal area $A_4$, and a guard space $G_4$ are formed in the stated order with a track angle $\theta$ of 5° 4' and a track pitch TP of 26.6 $\mu m$, this track pitch being intermediate the above values of 20.5 $\mu m$ and 34.4 $\mu m$ in the cases of NTSC and PAL.

If the mode is incorrectly set at the start of the reproducing operation, the tracking servo loop will not lock since the speed of the drum and the tape speed will be different from those used for recording. In such a case, the output level of the error signal produced by the four-frequency error detecting circuit 20 will not be within the predetermined frequency range, and accordingly the mode switching command will be produced by the mode switching command generating circuit 27. As a result, the output of the command generating circuit 4 will be inverted to control the mode switching automatically.

In the case discussed above where the speed of the drum in the second mode is 2,000 rpm, the number of PCM data words corresponding to one field, that is, the number of audio signal words recorded during the time the head turns through an angle of 180°, are 720 and 480 for sampling frequencies of 48 kHz and 32 kHz, respectively. That is, the number of data words is an integer number. Moreover, because the number of sampling bits (bits per block) is 16 when the sampling frequency is 48 kHz, with each word being composed of two bytes and with eight bytes per block, data for 180 blocks is recorded in each of the first through fourth audio signal areas $A_1$ to $A_4$ (for a sampling frequency of 48 kHz). Each of the areas $A_1$ to $A_4$ corresponds an angle of rotation of 40° of the head. Therefore, the available data recording space is used most efficiently. (The remainder of the available area is taken up by the clock signal IDG (Inter Data Gap) overflow margin, etc.) In the NTSC system, for the areas $A_1$ to $A_4$ there is room to record data for about 200 blocks, while in the PAL system about 239 blocks can be recorded. Hence, there is space available in both cases. Moreover, if the sampling frequency is reduced to 32 kHz and 12 bits per sample are employed, eight channels of audio can be recorded (16 bits $\times$ 48 kHz = 2 $\times$ 12 bits $\times$ 32 kHz).

The memory capacity M needed for correcting errors in the PCM data recorded in the areas $A_1$ to $A_4$ can be expressed by the following equation:

$$M = N \times B \times X \times C \times F, \tag{1}$$

where N is the number of data blocks stored in each of the

areas $A_1$ to $A_4$, B is the number of bytes of data and error detecting codes within one block, C is the number of channels being simultaneously processed, and F is the number of fields where the data simultaneously being processed is present.

If data for 180 blocks is recorded in each of the areas $A_1$ to $A_4$, M = 64.60 (K bits) from equation (1), with B = 10, X = 8 + 1, C = 2 and F = 2. Accordingly, a 64K RAM (having an actual capacity of $2^{16}$ = 65,535 bits) can be used with a maximum degree of efficiency.

## CLAIMS

1.  A magnetic recording and reproducing apparatus, comprising: a head drum; a pair of magnetic heads mounted on said head drum and spaced apart from one another by an angle of 180°, a magnetic tape passing around said drum through an angle of greater than 180°, whereby each of said magnetic heads contacts said magnetic tape during rotation thereof during a first period; means for recording a first data signal using said magnetic heads during a second period during which each of said magnetic heads rotates through an angle of 180°; means for recording a second data signal during a third period during which said magnetic heads rotate through a predetermined angle; means for generating a first command when a signal bearing video data as said first data signal is recorded and reproduced and a second command when a signal bearing PCM audio data as said first data signal is recorded and reproduced; means for driving said head drum at a first rotational speed and said magnetic tape at a first feeding speed when said first command is given and for driving said head drum at a second rotational speed and said magnetic tape at a second feeding speed when said second command is given.

2.  A magnetic recording and reproducing apparatus, comprising: a head drum; a pair of magnetic heads mounted on said head drum and spaced apart from one another by an angle of 180°, a magnetic tape passing around said drum through an angle of greater than 180°, whereby each of said magnetic heads contacts said magnetic tape during rotation thereof during a first period; means for recording a first data signal using said magnetic heads during a second period during which each of said magnetic heads rotates through an angle of 180°; means for recording a second data signal during a third period during which said magnetic heads rotate through a predetermined angle; a servo mechanism for performing tracking control in accordance with a four-frequency pilot tracking method during reproducing; means for generating a switching command when said servo mechanism is not in a locked condition within a predetermined period of time following the start of a reproducing operation; and means for changing a rotational speed of said head drum and a feeding speed of said magnetic tape in response to said mode switching command.

Fig. 1

Fig. 2A

$\cdots$ | $a_{10}$ | $a_{11}$ | $a_{12}$ | $a_{13}$ | $\cdots\cdots\cdots\cdots\cdots$ | $a_{1n}$ | $\cdots$

Fig. 2B

$\cdots$ | $a_{20}$ | $a_{21}$ | $a_{22}$ | $a_{23}$ | $\cdots\cdots\cdots\cdots\cdots$ | $a_{2n}$ | $\cdots$

Fig. 2C

$\cdots$ | $a_{30}$ | $a_{31}$ | $a_{32}$ | $a_{33}$ | $\cdots\cdots\cdots\cdots\cdots$ | $a_{3n}$ | $\cdots$

Fig. 2D

$\cdots$ | $a_{40}$ | $a_{41}$ | $a_{42}$ | $a_{43}$ | $\cdots\cdots\cdots\cdots\cdots$ | $a_{4n}$ | $\cdots$

Fig. 2E

$S$ | $a_{10}$ | $a_{11}$ | $a_{12}$ | $\cdots$ $\cdots$ $a_{1n}$ | $G$ | $S$ | $a_{20}$ | $a_{21}$ | $a_{22}$ | $\cdots$ $\cdots$ $a_{2n}$ | $G$ | $S$ | $a_{30}$ | $\cdots$ $\cdots$ $a_{3n}$ | $G$ | $S$ | $a_{40}$ | $\cdots$ $\cdots$

Fig. 3

TP

$G_4$

$180°$

$T$

$G_3$

$G_2$

$A_0$ $G_1$

$\varepsilon$

Fig. 4

第4図